# EUROPÄISCHE PATENTANMELDUNG

(11) **EP 4 496 178 A1**
(43) Veröffentlichungstag der Anmeldung: **22.01.2025**
(21) Anmeldenummer: 23186891.0
(22) Anmeldetag: 21.07.2023
(51) Int. Cl.: H02J 7/34, H02J 7/00, H02J 9/06

(54) **VERFAHREN ZUM BETRIEB EINES SPEICHERKONDENSATORS, GESAMTVORRICHTUNG, COMPUTERPROGRAMM UND ELEKTRONISCH LESBARER DATENTRÄGER**

(71) Anmelder: Siemens Healthineers AG, 91301 Forchheim (DE)
(72) Erfinder: Parissis, Gerassimos, 90419 Nürnberg (DE)
(74) Vertreter: Siemens Healthineers Patent Attorneys

(57) **Zusammenfassung**

Die Erfindung betrifft ein Verfahren zum Betrieb eines Speicherkondensators (10), der
- als Energiepuffer einer aus dem Speicherkondensator (10) betreibbaren, gepufferten Verbrauchereinrichtung (11) parallel geschaltet ist,
- eine maximal zum Betrieb zu verwendende Nennspannung aufweist und
- durch eine Betriebsspannung (2, 7, 21, 24, 28, 32, 33) einer übergeordneten Gesamtvorrichtung (36), die dem Speicherkondensator (10) und der Verbrauchereinrichtung (11) in einem Normalbetriebsmodus, in dem die Verbrauchereinrichtung (11) durch die Betriebsspannung betrieben wird, bereitgestellt wird, auf einen von einem an dem Speicherkondensator (10) anfallenden Anteil der Betriebsspannung (2, 7, 21, 24, 28, 32, 33), der kleiner als die Nennspannung ist, abhängigen maximalen Ladezustand ladbar ist,
dadurch gekennzeichnet, dass
durch eine Steuereinrichtung (16) bei Erfüllung einer Anpassungsbedingung, die wenigstens eine Betriebsinformation des Speicherkondensators (10) und/oder wenigstens eine Betriebsinformation der Gesamtvorrichtung (36) auswertet, die Betriebsspannung (2, 7, 21, 24, 28, 32, 33) wenigstens temporär erhöht wird.

## Beschreibung

Die Erfindung betrifft ein Verfahren zum Betrieb eines Speicherkondensators, der
- als Energiepuffer einer aus dem Speicherkondensator betreibbaren, gepufferten Verbrauchereinrichtung parallel geschaltet ist,
- eine maximal zum Betrieb zu verwendende Nennspannung aufweist und
- durch eine Betriebsspannung einer übergeordneten Gesamtvorrichtung, die dem Speicherkondensator und der Verbrauchereinrichtung in einem Normalbetriebsmodus, in dem die Verbrauchereinrichtung durch die Betriebsspannung betrieben wird, bereitgestellt wird, auf einen von einem an dem Speicherkondensator anfallenden Anteil der Betriebsspannung, der kleiner als die Nennspannung ist, abhängigen maximalen Ladezustand ladbar ist.

Daneben betrifft die Erfindung eine Gesamtvorrichtung, ein Computerprogramm und einen elektronisch lesbaren Datenträger.

In verschiedenen Gesamtvorrichtungen, insbesondere Geräten, existieren Verbrauchereinrichtungen, die auch dann weiter bestromt werden sollen, wenn die Gesamtvorrichtung gerade nicht in Betrieb (abgeschaltet) ist oder ihre Betriebsspannung aus anderen Gründen nicht zur Verfügung steht. Solche Verbrauchereinrichtungen können Sensoren, Zeitgeber und/oder Speichermittel, in denen Informationen zumindest für einen Zeitraum gesichert werden sollen, sein oder umfassen. Ein Beispiel für eine solche Verbrauchereinrichtung ist eine Echtzeituhr (Real Time Clock - RTC), deren Stand gesichert sein muss, beispielsweise auch für Lizenzprüfungen und/oder sonstige Sicherheitsmaßnahmen und/oder Erfassungsmaßnahmen. Für derartige Verbrauchereinrichtungen wurde vorgeschlagen, ihnen zur Pufferung bei Wegfall der Betriebsspannung einen elektrischen Energiespeicher zuzuordnen, beispielsweise bei typischen elektronischen und elektrischen Geräten eine Knopfzelle. Derartige Batterien müssen nach einiger Zeit ausgetauscht werden, was sich insbesondere bei eingebetteten Systemen, beispielsweise modernen Steuereinrichtungen in Kraftfahrzeugen, als schwierig erweist.

Daher, und auch aufgrund verbesserter Eigenschaften, wurde vorgeschlagen, aufladbare Speicherkondensatoren, insbesondere Superkondensatoren, einzusetzen, die so dimensioniert sind, dass sie die gewünschten Anforderungen erfüllen, beispielsweise nach einer bestimmten Zahl an Jahren Betriebsdauer noch immer für ein vorbestimmtes Zeitintervall, beispielsweise eine Zahl von Tagen, aufgrund der verbliebenen Kapazität die Verbrauchereinrichtung betrieben werden kann.

Die Lebensdauer von Superkondensatoren wird üblicherweise zu dem Zeitpunkt hin definiert, an dem die Kapazität gegenüber der ursprünglichen Nennkapazität um 30 % gesunken ist. Dabei wird die Lebensdauer von Superkondensatoren von Faktoren wie der Betriebsspannung, der Temperatur, dem Entladungsstrom und der Feuchtigkeit beeinflusst. Als empirische Regeln ist bekannt, dass für jede 10 K Temperaturreduzierung sowie für jedes Volt Reduzierung der Betriebsspannung bei elektronischen Gesamtvorrichtungen eine Verdoppelung der Lebensdauer erreicht werden kann. Bei der Dimensionierung des Superkondensators müssen alle genannten Faktoren berücksichtigt werden, sodass über die gesamte Produktlebensdauer der Gesamtvorrichtung eine gewünschte Minimalkapazität gewährleistet wird.

Zur genaueren Berechnung von Lebensdauern sind von Herstellern von Superkondensatoren (oder allgemein Speicherkondensatoren) teilweise auch Formeln bekannt, wo ausgehend von einer Lebensdauer für die maximale Betriebstemperatur und die Nennspannung Lebensdauern auch für andere Betriebstemperaturen und Betriebsspannungen berechnet werden können. Dabei ist allerdings bei der Dimensionierung und der Wahl der Betriebsspannung für den Superkondensator auch zu berücksichtigen, dass für die Verbrauchereinrichtung ebenso ein zulässiger Spannungsbereich existiert, mithin zur Erhöhung der Lebensdauer die Betriebsspannung nicht beliebig reduziert werden kann.

Um am Ende der Produktlebensdauer der Gesamtvorrichtung noch immer wenigstens die minimale Kapazität bereitstellen zu können, die für die korrekte Funktion der jeweiligen elektronischen Schaltung benötigt wird, wird bislang die initiale Kapazität des Speicherkondensators überdimensioniert, was entsprechende Nachteile hinsichtlich Bauraum und Kosten mit sich bringt.

Ein weiteres Problem beim Einsatz von Speicherkondensatoren, insbesondere Superkondensatoren, liegt in dem langen Zeitraum, der für das initiale laden benötigt wird. Versuche haben gezeigt, dass beispielsweise mehrere Wochen vergehen können, bis sich ein Superkondensator vollständig aufgeladen hat. Bei der Herstellung des Gerätes, wenn beispielsweise eine initiale Konfiguration der Verbrauchereinrichtung vom Werk bis zur Inbetriebnahme bei einem Benutzer nicht verloren gehen soll, kann dies problematisch sein.

Zur Lösung dieser Problemstellung wurde vorgeschlagen, die Gesamtvorrichtung im Rahmen der Herstellung für eine längere Zeit, beispielsweise einen kompletten Tag, zu betreiben, sodass in dem Speicherkondensator ausreichend Energie gespeichert wird, um bis zur tatsächlichen Inbetriebnahme bei einem Kunden die Verbrauchereinrichtung betreiben zu können. Dies verlängert die Produktionszeit der Gesamtvorrichtung.

Der Erfindung liegt die Aufgabe zugrunde, eine einfach umsetzbare Verbesserung des Betriebs eines Speicherkondensators bereitzustellen, die trotz Dimensionierungsvorteilen Anforderungen an die Pufferung elektrischer Energie sicherzustellen vermag.

Zur Lösung dieser Aufgabe sind erfindungsgemäß ein Verfahren, eine Gesamtvorrichtung, ein Computerprogramm und ein elektronisch lesbarer Datenträger gemäß den unabhängigen Patentansprüchen vorgesehen. Vorteilhafte Ausgestaltungen ergeben sich aus den Unteransprüchen.

Bei einem, insbesondere computerimplementierten, Verfahren der eingangs genannten Art ist erfindungsgemäß vorgesehen, dass durch eine Steuereinrichtung bei Erfüllung einer Anpassungsbedingung, die wenigstens eine Betriebsinformation des Speicherkondensators und/oder wenigstens eine Betriebsinformation der Gesamtvorrichtung auswertet, die Betriebsspannung wenigstens temporär erhöht wird.

Dabei handelt es sich bei der Gesamtvorrichtung insbesondere um ein Gerät. Ferner kann die Verbrauchereinrichtung vorzugsweise in einer elektronischen Komponente der Gesamtvorrichtung bzw. des Geräts vorgesehen sein. Die Betriebsspannung wird dem Speicherkondensator und der Verbrauchereinrichtung dann bereitgestellt, wenn die Gesamtvorrichtung angeschaltet ist. Bei Wegfall der Betriebsspannung, insbesondere bei gewolltem oder ungewolltem Abschalten und/oder sonstigen Defekten, beispielsweise auch nur an der elektronischen Komponente, kann die Verbrauchereinrichtung aus dem Speicherkondensator, insbesondere einem Superkondensator, als elektrischer Energiespeicher betrieben werden. Die Verbrauchereinrichtung weist einen Verbraucherspannungsbereich, in dem sie betreibbar ist, wobei jegliche Betriebsspannungen so gewählt werden, dass sie innerhalb des Verbraucherspannungsbereichs liegen. Das bedeutet insbesondere, dass die Verbrauchereinrichtung so lange aus dem Speicherkondensator betrieben werden kann, bis dessen Spannung unter die minimale Verbraucherspannung des Verbraucherspannungsbereichs sinkt.

Dabei sei an dieser Stelle noch angemerkt, dass bei Betrachtungen zur Lebensdauer des Speicherkondensators davon ausgegangen wird, dass andere Einflüsse auf die Lebensdauer, insbesondere die Temperatur, die Feuchtigkeit und der Entladungsstrom, stabil bleiben, beispielsweise gezielt, um auf der sicheren Seite zu sein, als am ungünstigen Rand des Betriebsbereiches der Gesamtvorrichtung gelegen angenommen werden. Es wird ferner darauf hingewiesen, dass zu einer die Betriebsspannung liefernden Spannungsquelle hin üblicherweise, eine Diode vorgesehen ist, um eine Entladung in diese Richtung zu vermeiden. An dieser Diode kann bereits ein Teil der von der Spannungsquelle gelieferten Betriebsspannung abfallen, so dass die tatsächlich an dem Speicherkondensator und der Verbrauchereinrichtung anliegende Restspannung etwas niedriger als die Betriebsspannung ist. Derartige Effekte, gegebenenfalls auch durch andere Bauteile, sollten selbstverständlich entsprechend berücksichtigt werden. Man kann also sagen, dass die Betriebsspannung an eine Schaltung angelegt wird, in der der Speicherkondensator und die Verbrauchereinrichtung parallel geschaltet sind, die aber auch weitere Komponenten, insbesondere eine zwischen der Parallelschaltung und der Spannungsquelle vorgesehene Diode, enthalten kann. Nichtsdestotrotz wird zur besseren Verständlichkeit im Folgenden verkürzend von einem Anlegen der Betriebsspannung an den Speicherkondensator gesprochen.

Erfindungsgemäß wird vorgeschlagen, die Kapazität des Speicherkondensators besser auszunutzen, indem zumindest für Anteile einer gesamten vorgesehenen Nutzungszeit (Produktlebensdauer der Gesamtvorrichtung) des Speicherkondensators, die weniger ins Gewicht fallen, die Betriebsspannung erhöht wird, bevorzugt, worauf noch näher eingegangen werden wird, zum Ende der Nutzungszeit und/oder bei Vorliegen von Betriebsinformationen, die dies temporär auch zu früheren Zeitpunkten schon sinnvoll erscheinen lassen. Wird eine größere Betriebsspannung an den Speicherkondensator angelegt, kann eine größere elektrische Energiemenge in dem Speicherkondensator gespeichert werden, so dass insbesondere Kapazitäts- und/oder Zeitdefizite ausgeglichen werden können, um dennoch Anforderungen, beispielsweise an die minimale Betriebsdauer der Verbrauchereinrichtung ohne Betriebsspannung, erfüllen zu können.

Mit anderen Worten wird also vorgeschlagen, von einem über die Produktlebensdauer zu nutzenden Kompromiss für die Betriebsspannung abzugehen und zumindest zeitweise Erhöhungen der Betriebsspannung zuzulassen. Auf diese Weise kann insbesondere der Speicherkondensator kleiner dimensioniert werden, insbesondere in seiner Nenn-Kapazität reduziert werden, sodass ein geringerer Platzbedarf und eine Kostenreduktion erzielt werden können. Ferner kann, worauf im Folgenden noch näher eingegangen werden wird, auch Problemen durch Ausfall der Verbrauchereinrichtung bei der Inbetriebnahme nach Herstellung bzw. Wiederinbetriebnahme entgegengewirkt werden.

Wie bereits erwähnt, kann der Speicherkondensator bevorzugt ein Superkondensator, insbesondere ein EDLC, sein. Superkondensatoren haben deutlich höhere Kapazitätswerte als andere Kondensatoren bei niedrigeren Spannungsgrenzen. Beispielsweise kann ein Superkondensator zehn- bis hundertmal so viel Energie pro Einheitsvolumen oder Einheitsmasse speichern als elektrolytische Kondensatoren. Superkondensatoren weisen zudem bessere Ladezeiten als Batterien auf und überstehen eine größere Anzahl von Lade-Entlade-Zyklen. Bei dem Superkondensator handelt sich bevorzugt um einen elektrostatischen Doppelschichtkondensator (EDLC); denkbar ist jedoch auch die Nutzung eines elektrochemischen Pseudokondensators.

Was die Gesamtvorrichtung, insbesondere das Gerät, angeht, bestehen grundsätzlich keine Beschränkungen. So kann die Gesamtvorrichtung ein Kraftfahrzeug oder ein Steuergerät in einem Kraftfahrzeug genauso umfassen wie verschiedenste Gegenstände des sogenannten "Internet of Things" (IoT). Besonders bevorzugt kann es sich bei der Gesamtvorrichtung jedoch um eine Medizintechnikeinrichtung, insbesondere eine Bildaufnahmeeinrichtung, handeln. Neben besonders hohen Anforderungen an Ausfallsicherheit und Verfügbarkeit existieren auch bei Medizintechnikeinrichtungen Lizenzabgleiche und dergleichen, die die Verbrauchereinrichtung nutzen und voraussetzen, dass diese mit elektrischer Energie versorgt wird, auch wenn die Betriebsspannung, beispielsweise aufgrund eines Abschaltens des Geräts, nicht verfügbar ist. Die Medizintechnikeinrichtung kann insbesondere eine Bildaufnahmeeinrichtung sein, beispielsweise ein Computertomografiegerät oder eine sonstige Röntgeneinrichtung.

Konkret kann beispielsweise vorgesehen sein, dass die Verbrauchereinrichtung eine Echtzeituhr ist. Echtzeituhren (Real Time Clocks - RTCs) werden in Recheneinrichtungen, beispielsweise auch Steuergeräten von Medizintechnikeinrichtungen und dergleichen bzw. elektronischen Komponenten der Gesamtvorrichtung, zur Zeitmessung eingesetzt. Sie haben den Vorteil, einen niedrigen Energieverbrauch aufzuweisen, genau zu sein und sonstige Recheneinheiten für zeitkritische Aufgaben freizuhalten. Die dort gelieferte Zeitinformation kann insbesondere auch für sicherheitskritische Anwendungen hochrelevant sein. Daher ist ein Weiterbetrieb auch bei Wegfall der Betriebsspannung möglichst weitgehend sicherzustellen.

Es sind jedoch auch andere Verbrauchereinrichtungen denkbar, beispielsweise Sensoren in IoT-Gesamtvorrichtungen. Auch in Energie-Harvesting-Anwendungen, wenn beispielsweise die Betriebsspannung durch Solarzellen bereitgestellt wird, findet sich ein zweckmäßiges Anwendungsgebiet.

In einer ersten, bevorzugten, konkreten Ausführungsform kann vorgesehen sein, dass als Betriebsinformation des Speicherkondensators eine die aktuelle Kapazität des Speicherkondensators beschreibende Kapazitätsgröße, insbesondere eine bisherige Betriebsdauer des Speicherkondensators, verwendet wird. Das bedeutet insbesondere, dass mit zunehmender Betriebsdauer des Speicherkondensators zumindest einmalig eine Erhöhung der Betriebsspannung über die ursprüngliche Betriebsspannung erfolgen kann. Wie eingangs dargelegt wurde, existieren feststellbare Zusammenhänge, wie sich die Kapazität eines Speicherkondensators, insbesondere abhängig von der Betriebsdauer, verändert. Beispielsweise werden von Herstellern Tabellen bereitgestellt, die hinsichtlich der Lebensdauer bei bestimmten Bedingungen Kapazitätsverläufe beschreiben. Derartige Zusammenhänge können genutzt werden. Hierbei kann sich die Betriebsdauer auf den allgemeinen Einsatz beziehen, jedoch gegebenenfalls auch auf den Lastbetrieb. Sie ist einfach messbar, insbesondere dann, wenn ohnehin die Verbrauchereinrichtung eine Echtzeituhr ist. Die bisherige Betriebsdauer kann jedoch auch anderweitig bereitgestellt werden. Mittels einer Erhöhung der Betriebsspannung mit steigender Betriebsdauer kann ein durch den Betrieb eintretender Kapazitätsverlust des Speicherkondensators kompensiert werden.

Konkret kann vorgesehen sein, dass die Betriebsspannung derart gewählt ist oder wird, dass eine Fortbetriebsbedingung erfüllt wird, wonach ein Fortbetrieb der Verbrauchereinrichtung wenigstens für ein vorbestimmtes Zeitintervall mittels der in dem Speicherkondensator gespeicherten Energie möglich ist, wobei wenigstens eine der wenigstens einen Anpassungsbedingung die Erfüllbarkeit der Fortbetriebsbedingung mit der aktuellen Kapazität überprüft und bei Nichterfüllbarkeit die Betriebsspannung auf einen Wert erhöht, mit dem die Fortbetriebsbedingung erfüllt ist. Hierbei muss nicht zwangsläufig die tatsächliche Nichterfüllbarkeit geprüft werden, sondern es kann, insbesondere aus der Betriebsdauer, mithilfe von Annahmen, insbesondere Worst-Case-Annahmen, eine mögliche Nichterfüllbarkeit hergeleitet werden und eine entsprechende Erhöhung der Betriebsspannung zur Sicherheit vorgenommen werden. Die Anpassungsbedingung ist mithin gezielt derart gewählt, dass Anforderungen, hier die Fortbetriebsbedingung, sicher auch zukünftig erfüllt werden können, trotzdem, insbesondere durch Alterung, die Kapazität bereits gesunken ist.

Dem liegt der Gedanke zugrunde, bereits von Anfang an einen kleiner dimensionierten, mithin eine geringere Nenn-Kapazität aufweisenden, Speicherkondensator zu verwenden, der über den größten Teil seiner Nutzungszeit mit einer recht niedrigen Betriebsspannung betrieben werden kann, dessen Nutzungszeit hinsichtlich der Fortbetriebsbedingung jedoch verlängert werden kann, in dem zum Ende der Nutzungszeit, wenn dies weniger relevant ist, die Betriebsspannung erhöht wird, um die verloren gegangene Kapazität zumindest für eine bestimmte Verlängerungsdauer zu kompensieren. Dies kann selbstverständlich auch mehrschrittig oder zumindest im Wesentlichen kontinuierlich erfolgen, beispielsweise durch Erhöhungen in regelmäßigen Zeitabständen wie Wochen oder Monaten. Im letztgenannten Fall kann letztlich immer am unteren Rand der für die Erfüllung der Fortbetriebsbedingung benötigten Betriebsspannung gearbeitet werden.

Hierbei kann beispielsweise vorgesehen sein, dass in wenigstens einer der wenigstens einen Anpassungsbedingung die Kapazitätsgröße, insbesondere die Betriebsdauer, mit einem Schwellwert verglichen wird, bei dessen Überschreiten eine dem Schwellwert zugeordnete Betriebsspannung eingestellt wird. Die Betriebsspannung kann dabei insbesondere so gewählt sein oder werden, dass die Fortbetriebsbedingung erfüllt ist, auch wenn die Kapazitätsgröße, insbesondere die Betriebsdauer, den Schwellwert überschreitet. Dabei sei angemerkt, dass in einer derartigen Ausgestaltung zweckmäßig der wenigstens eine Schwellwert und die wenigstens eine zugeordnete Betriebsspannung vorgegeben sein können und eine tatsächliche Ermittlung der (Rest-)Kapazität des Speicherkondensators nicht zwangsläufig notwendig ist.

Besonders zweckmäßig kann es in Zusammenhang mit der Nutzung von Schwellwerten sein, wenn gestaffelte Anpassungsbedingungen mit abnehmende aktuelle Kapazität anzeigenden Schwellwerten für die Kapazitätsgröße und steigenden zugeordneten Betriebsspannungen verwendet werden.

Wie bereits erwähnt, kann hinsichtlich einer optimalen Betriebssicherheit vorgesehen sein, dass der wenigstens eine Schwellwert und/oder die Betriebsspannung, insbesondere im Hinblick auf die Fortbetriebsbedingung, durch eine Worst-Case-Annahme ermittelt sind oder werden. Ist beispielsweise bekannt, welche Toleranz angegebene Kapazitätswerte über eine Lebensdauer des Speicherkondensators aufweisen, kann diese Information genutzt werden, um eine Worst-Case-Annahme zu formulieren, die immer von der niedrigsten möglichen aktuellen Kapazität ausgeht. Ist als Toleranz für vom Hersteller über die Lebensdauer bereitgestellte Kapazitätswerte beispielsweise 80%/-20% angegeben, kann mit den -20% gearbeitet werden. Worst-Case-Annahmen können sich auch auf sonstige Betriebsbedingungen, insbesondere Temperatur und Feuchtigkeit, beziehen. So wird sichergestellt, dass selbst unter ungünstigsten Umständen die Anforderungen, insbesondere die Fortbetriebsbedingung, erfüllt werden kann.

In einem einfachen Ausführungsbeispiel kann mithin vorgesehen sein, dass, um die nützliche Lebensdauer eines Speicherkondensators, insbesondere Superkondensators, zu verbessern, dieser zunächst mit einer ersten Betriebsspannung für einen ersten Zeitraum (definiert durch einen Schwellwert für die Betriebsdauer) betrieben wird. Diese erste Betriebsspannung ist ein Kompromiss zwischen Lebensdauer und gespeicherter Energie in dem Speicherkondensator. Nachdem ein großer Teil der Nutzungszeit, insbesondere also der erste Zeitraum, vergangen ist, überschreitet die bisherige Betriebsdauer den Schwellwert, die Anpassungsbedingung ist also erfüllt, sodass für die restliche Zeit bis zum Ende der verlängerten Nutzungszeit des Speicherkondensators, die der Produktlebensdauer der Gesamtvorrichtung entsprechen kann, auf eine höhere zweite Betriebsspannung für diesen verbleibenden zweiten Zeitraum umgeschaltet wird. Dies beschleunigt die Alterung, also den Kapazitätsverlust, des Speicherkondensators, findet aber am Ende der gesamten Nutzungszeit statt und stellt letztlich zusätzliche Lebenszeit bereit, sodass keine relevanten negativen Auswirkungen entstehen. Durch den Betrieb mit der zweiten, höheren Betriebsspannung wird der Kapazitätsverlust bis zum durch den Schwellwert definierten Zeitpunkt kompensiert.

Rein beispielhaft kann der Umschaltzeitpunkt einige Jahre, beispielsweise 10 Jahre, betragen. Die Steuereinrichtung vergleicht zur Auswertung der Anpassungsbedingung die bisherige Betriebsdauer mit diesem Schwellwert und schaltet bei Überschreiten des Schwellwerts, also Erfüllung der Anpassungsbedingung, auf die zugeordnete zweite Betriebsspannung um. Im Allgemeinen können selbstverständlich auch mehrere Schwellwerte mit mehreren weiteren, höheren Betriebsspannungen als gestaffelte Anpassungsbedingungen verwendet werden.

Dies sei anhand eines Beispiels genauer erläutert. Für den Weiterbetrieb einer Verbrauchereinrichtung, insbesondere einer Echtzeituhr, soll ein Speicherkondensator, insbesondere ein Superkondensator, verwendet werden. Nach 10 Jahren soll die Echtzeituhr noch immer für wenigstens 30 Tage weiterbetrieben werden, wenn die Betriebsspannung der Gesamtvorrichtung wegfällt, beispielsweise diese abgeschaltet ist (Fortbetriebsbedingung). Die Echtzeituhr benötigt 600 nA im Fortbetrieb durch den Speicherkondensator und eine minimale Fortbetriebsspannung von 1 V. Die Betriebstemperatur liege beispielsweise bei 40 °C. Betrachtet man nun einen Superkondensator mit einer Nenn-Kapazität von 2,2 F, einer Entlade-Kapazität von 2,8 F, einer Nennspannung von 5,5 V und einer Lebensdauer (Lastbetrieb, definiert durch 30 % Kapazitätsverlust) von 1000 Stunden bei 70 °C, kann man bei 3 V Betriebsspannung eine Lebensdauer (Lastbetrieb) bei 40 °C von 32.000 Stunden herleiten. Mit diesen Daten ergibt sich bei exponentieller Abnahme für das Jahr 10 der Betriebsdauer eine Kapazität von 0,83 F und eine Fortbetriebszeit von 27,52 Stunden, die mithin die Fortbetriebsbedingung nicht erfüllt. Im Stand der Technik wäre der übliche Schritt nun, stattdessen einen Superkondensator mit einer nächsthöher verfügbaren Nenn-Kapazität von 3,3 F einzusetzen, der deutlich teurer und größer ist.

Die Erfindung erlaubt es jedoch, die Betriebsspannung nach etwa 10 Jahren (entsprechender Schwellwert, beispielsweise vorausberechnete Unterschreitung der 30 Tage, idealerweise unter Worst-Case-Annahme berechnet) auf einen höheren Wert, beispielsweise 4,5 V, zu erhöhen. Die gespeicherte elektrische Energie ist jetzt größer, allerdings verdoppelt sich die Alterung. Berechnungen zeigen, dass nun für das Jahr 10 die Fortbetriebszeit 48,17 Tage beträgt und sogar bis in das Jahr 12 über 30 Tage liegt. Mit dieser Vorgehensweise ist also der Superkondensator mit der Nenn-Kapazität von 2,2 F ausreichend und der Umstieg auf 3,3 F kann vermieden werden.

Dabei sei darauf hingewiesen, dass nicht zwangsläufig die wenigstens eine Anpassungsbedingung, insbesondere der Schwellwert mit zugeordneter erhöhter Betriebsspannung, vordefiniert sein muss, sondern bei der Auswertung der Anpassungsbedingung die Kapazitätsgröße über wenigstens einen Zusammenhang, insbesondere einen mathematischen Zusammenhang und/oder eine Look-Up-Tabelle, mit einer konkreten Kapazitätsangabe der aktuellen Kapazität in Beziehung gesetzt werden kann. Dann kann beispielsweise die Erfüllung der Fortbetriebsbedingung unmittelbar überwacht werden. Dies ist besonders zweckmäßig, wenn vorgesehen ist, dass die, insbesondere die aktuelle Kapazität direkt beschreibende, Kapazitätsgröße gemessen wird. Entsprechende Messmittel können beispielsweise durch die Steuereinrichtung und/oder die Verbrauchereinrichtung durchaus bereitgestellt sein und eine direkte oder indirekte Messung der aktuellen Kapazität des Speicherkondensators erlauben, insbesondere aufgrund dessen Entladeverhalten.

In einer zweiten, konkreten, bevorzugten Ausführungsform, die zusätzlich oder alternativ zu der ersten Ausführungsform verwendet werden kann, kann vorgesehen sein, dass wenigstens eine der wenigstens einen Anpassungsbedingung bei Erfüllung ein bevorstehendes Abschalten der Gesamtvorrichtung anzeigt, wobei bei Erfüllung der Anpassungsbedingung die Erhöhung der Betriebsspannung temporär bis zu dem Abschalten erfolgt. In diesem Fall betrifft die Betriebsinformation, die sich auf die Gesamtvorrichtung bezieht, also deren bevorstehendes Abschalten. Das bedeutet, beispielsweise vor einem definierten Herunterfahren der Gesamtvorrichtung kann kurzzeitig eine höhere Betriebsspannung für den Speicherkondensator (und die Verbrauchereinrichtung) genutzt werden, um zusätzliche elektrische Energie in dem Speicherkondensator einzuspeisen und somit die Fortbetriebszeit (Puffer-Zeit) zu verlängern, beispielsweise um einige Stunden oder Tage. Aufgrund der geringen Dauer dieser Erhöhung wirkt sich dies kaum auf die Lebensdauer des Speicherkondensators aus. Beispielsweise kann die Erhöhung vor dem Abschalten für eine bis dreißig Minuten vorliegen, wenn automatisch auf das bevorstehende Abschalten reagiert wird. Bei diesem ist vorgesehen, dass wenigstens eine der wenigstens einen auf das bevorstehende Abschalten bezogenen Anpassungsbedingung eine automatisch ermittelte und/oder von der Gesamtvorrichtung bereitgestellte Abschaltinformation als Betriebsinformation auswertet. Wählt ein Benutzer beispielsweise ein Herunterfahren der Gesamtvorrichtung an einer Bedieneinrichtung derselben an oder liegt ein beispielsweise zeitlich geplantes Abschalten bzw. Herunterfahren vor, kann während des Abschaltvorgangs bzw. Herunterfahrens die Erhöhung der Betriebsspannung genutzt werden, um zusätzliche Energie in den Speicherkondensator einzusprechen.

Denkbar kann es in vorteilhaften Ausführungsbeispielen jedoch auch sein, dass wenigstens eine der wenigstens einen auf das bevorstehende Abschalten bezogenen Anpassungsbedingung bei Vorliegen einer Benutzereingabe, die eine einen Grenzwert überschreitende Abschaltdauer des Abschaltzeitraums anzeigt, erfüllt ist. Auf diese Weise kann ein spezieller Vorbereitungs-Betriebsmodus in der Gesamtvorrichtung implementiert werden, der die Gesamtvorrichtung, hier den Speicherkondensator, auf eine längere Abschaltdauer vorbereiten kann. Hierbei kann insbesondere vorgesehen sein, dass die bis zu dem Abschalten zeitweise erhöhte Betriebsspannung in Abhängigkeit von der Abschaltdauer gewählt wird. So kann eine Fortbetriebszeit bereitgestellt werden, die der Abschaltdauer entspricht, wozu idealerweise eine geringstmögliche Betriebsspannung (und somit geringstmögliche zusätzliche Alterung) genutzt wird. Allgemein können so Fälle abgedeckt werden, in denen länger als durch eine Fortbetriebsbedingung definiert, insbesondere also länger als das vorbestimmte Zeitintervall, ein "Power off" vorliegen soll. Hier kann dennoch ein Fortbetrieb der Verbrauchereinrichtung erreicht werden. Beispielsweise kann die Benutzereingabe über ein speziell vorgesehenes Bedienelement zur Anwahl des Vorbereitungs-Betriebsmodus erfolgen.

In einer dritten, bevorzugten konkreten Ausführungsform, die ebenso alleinstehend oder in Kombination mit wenigstens einer der anderen Ausführungsformen benutzt werden kann, kann vorgesehen sein, dass wenigstens eine der wenigstens einen Anpassungsbedingung das Vorliegen einer initialen, insbesondere zeitlich begrenzten, Ladephase für den Speicherkondensator überprüft, wobei die Betriebsspannung für die initiale Ladephase temporär höher als für wenigstens eine folgende Ladephase eingestellt wird. In diesem Fall beschreibt die Betriebsinformation also das Vorliegen einer initialen Ladephase, insbesondere bei einer ersten Inbetriebnahme, bei der die Gesamtvorrichtung insbesondere am Ende der Herstellung konfiguriert wird, auch was die Verbrauchereinrichtung angeht. Wie eingangs bereits erwähnt wurde, benötigen Speicherkondensatoren, insbesondere Superkondensatoren, für den ersten vollen Ladevorgang einen langen Zeitraum, beispielsweise mehrere Wochen, wobei es allerdings ausreichend sein kann, bis zur tatsächlichen Inbetriebnahme bei einem Kunden hinreichend Fortbetriebszeit bereitzustellen, indem für einen kürzeren initialen Ladezeitraum geladen wird. Durch die Erhöhung der Betriebsspannung während dieser initialen Ladephase kann nun entweder mehr elektrische Energie in den Speicherkondensator bei gleicher Dauer der initialen Ladephase eingespeichert werden oder aber bei gleichbleibender einzuspeisender elektrischer Energie die initiale Ladephase zeitlich deutlich verkürzt werden. Somit verkürzt sich auch die Produktionszeit. Der Einfluss auf die Lebensdauer als äußerst gering, da es sich um einen sehr begrenzten Zeitraum handelt.

Zweckmäßigerweise kann vorgesehen sein, dass die Betriebsspannungen wenigstens teilweise durch wenigstens eine Spannungsquelle der Gesamtvorrichtung, insbesondere einen durch die Steuereinrichtung ansteuerbaren Gleichspannungswandler, bereitgestellt werden. Ein ansteuerbarer Gleichspannungswandler kann insbesondere eine größere Anzahl bzw. eine feinere Einstellung von Betriebsspannungen erlauben. Denkbar ist es jedoch, insbesondere bei einer insgesamt eher geringen Anzahl zu verwendender Betriebsspannungen, ohnehin vorhandene Spannungsquellen, die die entsprechenden Betriebsspannungen liefern, zu nutzen.

Die Steuereinrichtung kann die Überprüfung der Anpassungsbedingung sowie den Anpassungsvorgang softwarebasiert durchführen, beispielsweise unter Nutzung eines erfindungsgemäßen Computerprogramms. Möglich ist jedoch auch die wenigstens teilweise Nutzung von diskreten Bauelementen einer elektronischen Schaltung zur Erhöhung der Betriebsspannung bei Erfüllung der Anpassungsbedingung. In einer zweckmäßigen Ausgestaltung kann als Steuereinrichtung ein PMIC (Power Management Integrated Circuit), insbesondere mit integriertem Gleichspannungswandler, verwendet wird. Derartige PMICs weisen häufig bereits integrierte Gleichspannungswandler auf, die genutzt werden können, um die Betriebsspannung anzupassen. Damit ist eine besonders einfache Realisierung gegeben.

Neben dem Verfahren betrifft die Erfindung auch eine Gesamtvorrichtung, aufweisend eine Verbrauchereinrichtung, eine Steuereinrichtung und einen Speicherkondensator, der
- als Energiepuffer der aus dem Speicherkondensator betreibbaren, gepufferten Verbrauchereinrichtung parallel geschaltet ist,
- eine maximal zum Betrieb zu verwendende Nennspannung aufweist und
- durch eine Betriebsspannung der übergeordneten Gesamtvorrichtung, die dem Speicherkondensator und der Verbrauchereinrichtung in einem Normalbetriebsmodus, in dem die Verbrauchereinrichtung durch die Betriebsspannung betrieben wird, bereitgestellt wird, auf einen von einem an dem Speicherkondensator anfallenden Anteil der Betriebsspannung, der kleiner als die Nennspannung ist, abhängigen maximalen Ladezustand ladbar ist,
dadurch gekennzeichnet,
dass die Steuereinrichtung ausgebildet ist, bei Erfüllung einer Anpassungsbedingung, die wenigstens eine Betriebsinformation des Speicherkondensators und/oder wenigstens eine Betriebsinformation der Gesamtvorrichtung auswertet, die Betriebsspannung wenigstens temporär zu erhöhen.

Sämtliche Ausführungen bezüglich des erfindungsgemäßen Verfahrens lassen sich analog auf die erfindungsgemäße Gesamtvorrichtung, insbesondere ein Gerät, bevorzugt eine Medizintechnikeinrichtung, übertragen, sodass auch mit dieser die bereits genannten Vorteile erhalten werden können.

Ein erfindungsgemäßes Computerprogramm ist direkt in den Speicher einer Steuereinrichtung einer Gesamtvorrichtung, insbesondere einer erfindungsgemäßen Gesamtvorrichtung, ladbar und weist Programmmittel auf, die bei Ausführung des Computerprogramms die Steuereinrichtung veranlassen, die Schritte eines erfindungsgemäßen Verfahrens durchzuführen. Das Computerprogramm kann auf einem erfindungsgemäßen elektronisch lesbaren Datenträger gespeichert sein, welcher mithin darauf gespeicherte Steuerinformationen aufweist, die wenigstens ein erfindungsgemäßes Computerprogramm umfassen und derart ausgestaltet sind, dass bei Verwendung des Datenträgers in einer Steuereinrichtung einer erfindungsgemäßen Gesamtvorrichtung diese ausgebildet wird, ein erfindungsgemäßes Verfahren durchzuführen.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: einen allgemeinen Ablaufplan von Ausführungsbeispielen des erfindungsgemäßen Verfahrens,
- Fig. 2: einen ersten möglichen zeitlichen Verlauf einer Betriebsspannung,
- Fig. 3: eine Schaltung zur Realisierung des Verlaufs der Fig. 2,
- Fig. 4: einen zweiten möglichen zeitlichen Verlauf einer Betriebsspannung,
- Fig. 5: eine Schaltung zur Realisierung des Verlaufs der Fig. 4,
- Fig. 6: einen dritten möglichen zeitlichen Verlauf einer Betriebsspannung,
- Fig. 7: einen vierten möglichen zeitlichen Verlauf einer Betriebsspannung, und
- Fig. 8: schematisch eine erfindungsgemäße Gesamtvorrichtung.

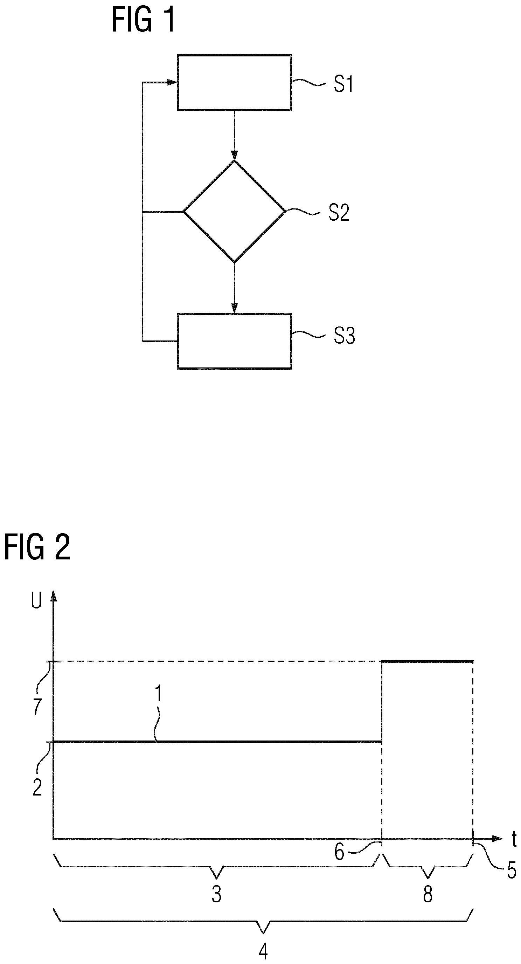

Fig. 1 zeigt einen allgemeinen Ablaufplan von Ausführungsbeispielen des erfindungsgemäßen Verfahrens. Dabei wird zumindest während des normalen Betriebs einer Gesamtvorrichtung, insbesondere also bei eingeschalteter Gesamtvorrichtung, in einem Schritt S1 wenigstens eine Betriebsinformation zu einem Speicherkondensator und/oder wenigstens eine Betriebsinformation der Gesamtvorrichtung ermittelt. Der Speicherkondensator, in den vorliegenden Ausführungsbeispielen ein Superkondensator, ist hierbei einer Verbrauchereinrichtung, beispielsweise einer Echtzeituhr, parallel geschaltet, um die Verbrauchereinrichtung bei Wegfall einer sonstigen, von der Gesamtvorrichtung bereitgestellten Betriebsspannung zumindest so lange weiterbetreiben zu können, wie die in dem Speicherkondensator gespeicherte elektrischer Energie erlaubt. Dieser Wegfall kann beispielsweise bei einem Abschalten, insbesondere einer Außerbetriebnahme, der Gesamtvorrichtung auftreten.

Im Normalbetriebsmodus jedoch wird einer den Speicherkondensator und die Verbrauchereinrichtung umfassenden Schaltung eine Betriebsspannung derart bereitgestellt, dass an dem Speicherkondensator und mithin auch der parallel geschalteten Verbrauchereinrichtung zumindest ein Anteil der Betriebsspannung anliegt, der zum einen größer als die minimal zum Betrieb der Verbrauchereinrichtung notwendige minimale Verbraucherspannung der Verbrauchereinrichtung ist (und auch allgemein in einem zulässigen Verbraucherspannungsbereich der Verbrauchereinrichtung liegt) und zum anderen kleiner als die Nennspannung des Speicherkondensators ist, um dessen Alterung, also Kapazitätsverlust, in Grenzen zu halten. Dennoch ist die Betriebsspannung ausreichend, um eine Fortbetriebsbedingung zu erfüllen, der gemäß die Verbrauchereinrichtung wenigstens für ein vorbestimmtes Zeitintervall aus dem Speicherkondensator weiter betreibbar ist.

Die wenigstens eine im Schritt S1 ermittelte Betriebsinformation bezieht sich nun auf wenigstens einen Umstand, der eine zumindest temporäre Erhöhung der Betriebsspannung (und somit auch des an dem Speicherkondensator anliegenden Anteils) rechtfertigen kann.

Daher wird die Betriebsinformation in einem Schritt S2 durch wenigstens eine Anpassungsbedingung ausgewertet. Wenigstens eine der wenigstens einen Anpassungsbedingung bezieht sich dabei vorzugsweise auf die Erfüllbarkeit der Fortbetriebsbedingung und deren auch zukünftige Sicherstellung, sodass hier ein Kapazitätsverlust durch Alterung kompensiert werden kann. Wenigstens eine der wenigstens einen Anpassungsbedingung kann sich ferner auf einen im Vergleich zur gesamten Nutzungszeit des Speicherkondensators, welche der Produkt-Lebensdauer der Gesamtvorrichtung entsprechen kann, kurzen Zeitraum vor einem Wegfall der Betriebsspannung, beispielsweise vor einem Abschalten der Gesamtvorrichtung, beziehen, um zusätzliche Energie im Speicherkondensator einspeichern zu können, beispielsweise als Vorbereitung für einen längeren ausgeschalteten Zustand. Schließlich kann sich wenigstens eine der wenigstens einen Anpassungsbedingung auch auf eine initiale Ladephase beziehen, die verkürzt werden soll oder aber in der mehr Energie in den Speicherkondensator eingespeichert werden soll.

Die Überprüfung der Anpassungsbedingung wird durch eine Steuereinrichtung der Gesamtvorrichtung durchgeführt, die auch die Betriebsinformation ermitteln oder aber zumindest über eine Schnittstelle entgegennehmen kann. Die Betriebsinformation kann einfach ausgestaltet sein, beispielsweise als ein binäres Signal, insbesondere ein ein bevorstehendes Herunterfahren der Gesamtvorrichtung anzeigendes Signal, oder aber auch eine kontinuierliche Information sein, beispielsweise eine bisherige Betriebsdauer des Speicherkondensators. Handelt es sich bei der Verbrauchereinrichtung um eine Echtzeituhr, kann diese auch unmittelbar eine solche Betriebsdauer erfassen; anderenfalls kann ein Zeitmesser der Steuereinrichtung bzw. eine sonstige Echtzeituhr verwendet werden.

Ist keine Anpassungsbedingung im Schritt S2 erfüllt, wird wieder zu Schritt S1 zurückgekehrt, sodass zyklisch die Erfüllung einer Anpassungsbedingung überprüft werden kann. Ist jedoch eine der Anpassungsbedingungen erfüllt, wird im Schritt S3 durch die Steuereinrichtung wenigstens temporär die Betriebsspannung erhöht, bevor zu Schritt S1 zurückgekehrt wird.

Dies alles sei durch konkrete Senkungsmaßnahmen für die Betriebsspannung und entsprechende Anpassungsbedingungen im Folgenden näher erläutert.

Fig. 2 erläutert einen möglichen Verlauf 1 der Betriebsspannung über die Zeit gemäß einer ersten, konkreten Ausführungsform.

Ersichtlich beginnt der Verlauf 1 mit einer gezielt niedrig gewählten ersten Betriebsspannung 2 für einen ersten Zeitraum 3, der den deutlich größeren Anteil einer vorgesehenen Nutzungszeit 4 für den Speicherkondensator einnimmt. Das Ende der Nutzungszeit 4 kann dem Ende 5 der geplanten Produkt-Lebensdauer für die Gesamtvorrichtung entsprechen.

Als Anpassungsbedingung wird dabei die Überschreitung eines dem ersten Zeitraum 3 entsprechenden Schwellwerts für die Betriebsdauer des Speicherkondensators als Betriebsinformation verwendet. Die Anpassungsbedingung ist also erfüllt, wenn die Betriebsdauer zu einem dem Schwellwert entsprechenden Zeitpunkt 6 den Schwellwert überschreitet, sodass zu diesem Zeitpunkt 6 auf eine gegenüber der ersten Betriebsspannung 2 erhöhte zweite Betriebsspannung 7 für den zweiten Zeitraum 8 bis zum Ende der Nutzungszeit 4 umgeschaltet wird. Damit wird zwar die Alterung und somit der Kapazitätsverlust des Speicherkondensators erhöht, allerdings lediglich zum Ende der geplanten Nutzungszeit 4 und derart, dass die Fortbetriebsbedingung dennoch weiterhin erfüllt werden kann, letztlich also der Speicherkondensator trotz niedrigerer gewählter Nenn-Kapazität länger eingesetzt werden kann.

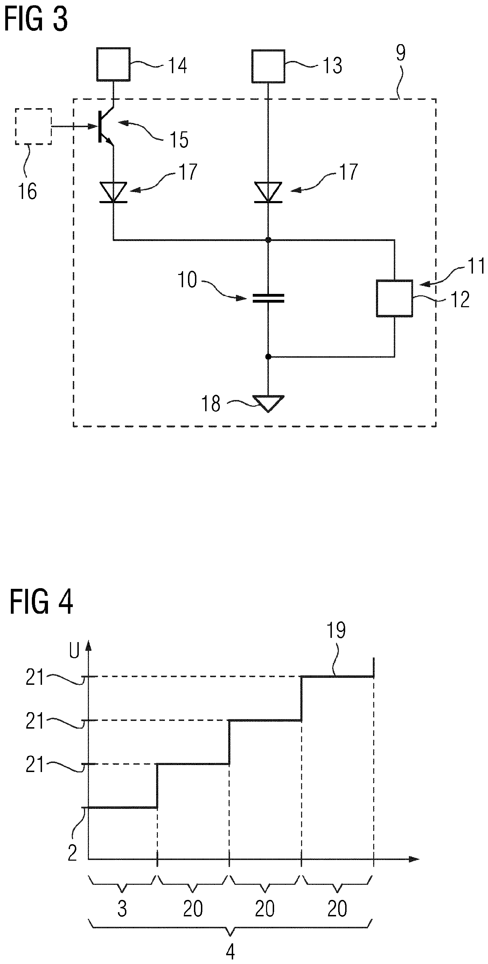

Fig. 3 zeigt eine mögliche Verschaltung für einen solchen Fall mit zwei denkbaren Betriebsspannungen 2, 7. Eine Schaltung 9 enthält den als Superkondensator ausgeführten Speicherkondensator 10 sowie die diesem parallel geschaltete Verbrauchereinrichtung 11, vorliegend eine Echtzeituhr 12 (RTC). An diese Schaltung 9 sind vorliegend eine erste Spannungsquelle 13 für die erste Betriebsspannung 2 und eine zweite Spannungsquelle 14 für die zweite Betriebsspannung 7 angeschlossen, wobei für die zweite Spannungsquelle 14 ein Schalter 15, insbesondere ein Halbleiterschalter, verwendet wird. Der Halbleiterschalter 15 ist über die hier nur angedeutete Steuereinrichtung 16 ansteuerbar. In den Leitungen für beide Spannungsquellen 13, 14 sind jeweils, wie grundsätzlich bekannt, Dioden 17 vorgesehen, um eine Entladung aus der Schaltung 9 heraus zu vermeiden. Die Masse 18 ist ebenso dargestellt.

Wird nun in der Steuereinrichtung 16 festgestellt, dass die Anpassungsbedingung erfüllt ist, mithin die Betriebsdauer den Schwellwert überschreitet, steuert diese den Schalter 15 zum Schließen an, sodass die zweite Betriebsspannung 7 der zweiten Spannungsquelle 14 genutzt wird.

Eine beispielhafte Berechnung zur Gestaltung der Anpassungsbedingung bei einer vorgesehenen Stufe in der Betriebsspannung wurde oben für den 2,2 F-Superkondensator bereits dargelegt.

Allerdings kann in Ausführungsbeispielen auch eine weitere Abstufung durch die Nutzung gestaffelter Anpassungsbedingungen vorgesehen sein. Ein derartiges Ausführungsbeispiel der ersten Ausführungsform zeigt der Verlauf 19 der Fig. 4, bei dem ersichtlich nach der ersten Betriebsspannung 2 und dem ersten Zeitraum 3 beispielhaft drei weitere Zeiträume 20 mit jeweils erhöhten Betriebsspannungen 21 folgen, die beispielsweise so gewählt und definiert sind, dass jeweils mit engerem Abstand die Fortbetriebsbedingung erfüllt ist.

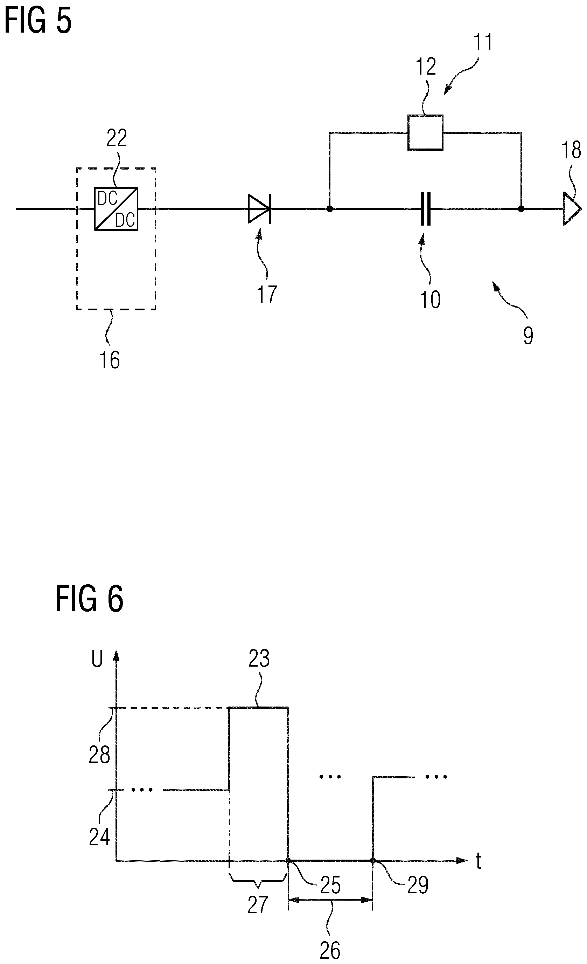

Für solche, eine größere Anzahl verschiedener Betriebsspannungen 2, 7, 21 nutzende Ausführungsbeispiele kann eine Ausgestaltung der Schaltung 9, wie sie in Fig. 5 gezeigt ist, besonders zweckmäßig sein. Dort ist ein ansteuerbarer Gleichspannungswandler 22, vorliegend als Teil der Steuereinrichtung 16, die ein PMIC sein kann, als Spannungsquelle vorgesehen, der die entsprechenden Betriebsspannungen für die Schaltung 9 mit der Diode 17, dem Speicherkondensator 10 und der Verbrauchereinrichtung 11 bereitstellen kann. Selbst verständlich kann eine solche Ausgestaltung auch für das erste Ausführungsbeispiel der Fig. 2 genutzt werden. Darüber hinaus sind selbstverständlich auch andere Wege denkbar, steuerbar in einem Schaltungsabschnitt unterschiedliche Betriebsspannungen bereitzustellen, beispielsweise durch einen Spannungsteiler mit einem steuerbar veränderbaren Widerstand.

Fig. 6 zeigt abschnittsweise einen weiteren möglichen Verlauf 23 der Betriebsspannung bei Verwendung wenigstens einer Anpassungsbedingung gemäß der zweiten Ausführungsform. In diesem Fall zeigt die Anpassungsbedingung einen bevorstehenden Wegfall der Betriebsspannung 24 des Normalbetriebsmodus an (wobei bei Kombination mit der ersten Ausführungsform die Betriebsspannung 24 des Normalbetriebsmodus jede der Betriebsspannungen 2, 7, 21 sein kann). Der Wegfall der Betriebsspannung kann dabei insbesondere durch ein Abschalten, beispielsweise ein Herunterfahren, der Gesamtvorrichtung, eintreten, das geplant, automatisch initiiert oder aufgrund einer Benutzereingabe zu einem Zeitpunkt 25 erfolgen soll, was durch den Wert von Null für den Verlauf 23 der Betriebsspannung in diesem Abschaltzeitraum 26 angedeutet wird.

Vor diesem Abschaltzeitraum 26 wird temporär für einen Erhöhungszeitraum 27, der vorgegeben sein kann, von der Betriebsspannung 24 auf eine höhere Betriebsspannung 28 erhöht. Nachdem Abschaltzeitraum 26, Zeitpunkt 29, wird dann wieder die Betriebsspannung 24 genutzt.

Dabei gibt es im Wesentlichen zwei Varianten dieser Ausführungsform, die zweckmäßigerweise auch kombiniert eingesetzt werden können. Zum einen kann grundsätzlich, wenn ein Wegfall der Betriebsspannung bevorsteht, kurzzeitig, insbesondere nach Bekanntwerden dieser Betriebsinformation, die Erhöhung der Betriebsspannung 28 im Erhöhungszeitraum 27 erfolgen, um etwas zusätzliche Energie in den Speicherkondensator 10 einzuspeichern. Beispielsweise kann die Dauer des Erhöhungszeitraums dann im Bereich von einer bis dreißig Minuten liegen. Es ist jedoch auch denkbar, dass benutzerseitig bekannt ist, dass ein Abschaltzeitraum 26 längerer Abschaltdauer, die einen Grenzwert überschreitet, vorliegt, sodass insbesondere auf Grundlage der Betriebsspannung 24 die Verbrauchereinrichtung 11 nicht über den gesamten Abschaltzeitraum 26 betrieben werden könnte. Dann kann eine Benutzereingabe erfolgen, bei deren Vorliegen als Abschaltinformation der Abschaltzeitraum 26 durch insbesondere länger andauernde, beispielsweise einige Stunden oder sogar Tage, Erhöhung auf die Betriebsspannung 28 vorbereitet werden kann, sozusagen ein Vorbereitungs-Betriebsmodus für diesen Sonderfall genutzt werden kann. Hierfür kann ein spezielles Bedienelement an einem Benutzerinterface der Gesamtvorrichtung vorgesehen werden, beispielsweise als Bedienelement zur Anwahl des Vorbereitungs-Betriebsmodus.

In beiden Fällen haben die kurzen, insbesondere seltenen, Anhebungen kaum Einfluss auf die Alterung des Speicherkondensators 10.

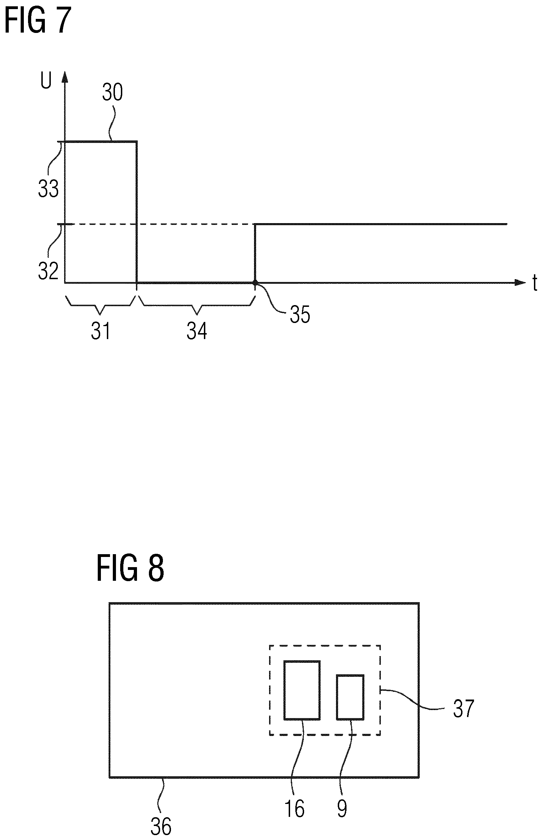

Schließlich erläutert der Verlauf 30 der Fig. 7 eine dritte Ausführungsform, in der die Anpassungsbedingung überprüft, ob eine initiale Ladephase 31, insbesondere zu Abschluss der Herstellung der Gesamtvorrichtung, vorliegt. Dann kann für diese eine gegenüber einer Betriebsspannung 32 für spätere Ladephasen erhöhte Betriebsspannung 33 verwendet werden, um trotz kürzerer Ladephase 31 eine Abschaltzeit 34 bis zur Inbetriebnahme bei einem Kunden zu einem Zeitpunkt 35 verlässlich überbrücken zu können. Aufgrund der kurzzeitig höheren Betriebsspannung 33 kann die initiale Ladephase 31 und somit die Produktionszeit verkürzt werden.

Es sei noch angemerkt, dass selbstverständlich durch entsprechende Kombination von Anpassungsbedingungen die Ausführungsformen auch kombiniert werden können, wobei dann die kurzzeitigen Erhöhungen der zweiten und dritten Ausführungsform immer wieder auf die zuletzt eingestellte Normalbetriebsmodus-Betriebsspannung 2, 7, 21 der ersten Ausführungsform zurückgekehrt wird.

Fig. 8 zeigt schließlich schematisch eine Prinzipskizze einer erfindungsgemäßen Gesamtvorrichtung 36, in der die hier nur angedeutete Schaltung 9 mit dem Speicherkondensator 10 und der Verbrauchereinrichtung 11 als Teil einer Elektronikkomponente 37 realisiert ist, zu der auch die Steuereinrichtung 16 gehören kann. Die Gesamtvorrichtung 36 kann ein Gerät sein und ist bevorzugt eine Medizintechnikeinrichtung, beispielsweise ein Computertomografiegerät.

Abschließend sei angemerkt, dass grundsätzlich eine Anwendung der Erfindung auch auf größeren Skalen, beispielsweise bei Speicherkondensatoren als Energiespeicher für regenerative Energien in Häusern, grundsätzlich denkbar ist. Für die Anwendung bei Elektronikkomponenten, insbesondere in eingebetteten Systemen, kann die Betriebsspannung beispielsweise im Bereich von ein bis zehn Volt liegen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zum Betrieb eines Speicherkondensators (10), der
- als Energiepuffer einer aus dem Speicherkondensator (10) betreibbaren, gepufferten Verbrauchereinrichtung (11) parallel geschaltet ist,
- eine maximal zum Betrieb zu verwendende Nennspannung aufweist und
- durch eine Betriebsspannung (2, 7, 21, 24, 28, 32, 33) einer übergeordneten Gesamtvorrichtung (36), die dem Speicherkondensator (10) und der Verbrauchereinrichtung (11) in einem Normalbetriebsmodus, in dem die Verbrauchereinrichtung (11) durch die Betriebsspannung betrieben wird, bereitgestellt wird, auf einen von einem an dem Speicherkondensator (10) anfallenden Anteil der Betriebsspannung (2, 7, 21, 24, 28, 32, 33), der kleiner als die Nennspannung ist, abhängigen maximalen Ladezustand ladbar ist,
**dadurch gekennzeichnet, dass**
durch eine Steuereinrichtung (16) bei Erfüllung einer Anpassungsbedingung, die wenigstens eine Betriebsinformation des Speicherkondensators (10) und/oder wenigstens eine Betriebsinformation der Gesamtvorrichtung (36) auswertet, die Betriebsspannung (2, 7, 21, 24, 28, 32, 33) wenigstens temporär erhöht wird.

2. Verfahren nach Anspruch 1, **dadurch gekennzeichnet, dass** als Betriebsinformation des Speicherkondensators (10) eine die aktuelle Kapazität des Speicherkondensators (10) beschreibende Kapazitätsgröße, insbesondere eine bisherige Betriebsdauer des Speicherkondensators (10), verwendet wird.

3. Verfahren nach Anspruch 2, **dadurch gekennzeichnet, dass** die Betriebsspannung derart gewählt ist oder wird, dass eine Fortbetriebsbedingung erfüllt wird, wonach ein Fortbetrieb der Verbrauchereinrichtung (11) wenigstens für ein vorbestimmtes Zeitintervall mittels der in dem Speicherkondensator (10) gespeicherten Energie möglich ist, wobei wenigstens eine der wenigstens einen Anpassungsbedingung die Erfüllbarkeit der Fortbetriebsbedingung mit der aktuellen Kapazität überprüft und bei Nichterfüllbarkeit die Betriebsspannung (2, 7, 21, 24, 28, 32, 33) auf einen Wert erhöht, mit dem die Fortbetriebsbedingung erfüllt ist.

4. Verfahren nach Anspruch 2 oder 3, **dadurch gekennzeichnet, dass** in wenigstens einer der wenigstens einen Anpassungsbedingung die Kapazitätsgröße, insbesondere Betriebsdauer, mit einem Schwellwert verglichen wird, bei dessen Überschreiten eine dem Schwellwert zugeordnete Betriebsspannung (7, 21) eingestellt wird.

5. Verfahren nach Anspruch 4, **dadurch gekennzeichnet, dass** gestaffelte Anpassungsbedingungen mit abnehmende aktuelle Kapazität anzeigenden Schwellwerten für die Kapazitätsgröße und steigenden zugeordneten Betriebsspannungen (21) verwendet werden.

6. Verfahren nach Anspruch 4 oder 5, **dadurch gekennzeichnet, dass** der wenigstens eine Schwellwert und/oder die wenigstens eine zugeordnete Betriebsspannung (7, 21), insbesondere im Hinblick auf die Fortbetriebsbedingung, durch eine Worst-Case-Annahme ermittelt sind oder werden.

7. Verfahren nach einem der Ansprüche 2 bis 6, **dadurch gekennzeichnet, dass** bei der Auswertung der Anpassungsbedingung die Kapazitätsgröße über wenigstens einen Zusammenhang, insbesondere einen mathematischen Zusammenhang und/oder eine Look-Up-Tabelle, mit einer konkreten Kapazitätsangabe der aktuellen Kapazität in Beziehung gesetzt wird und/oder die Kapazitätsgröße gemessen wird.

8. Verfahren nach einem der vorangehenden Ansprüche, **dadurch gekennzeichnet, dass** wenigstens eine der wenigstens einen Anpassungsbedingung bei Erfüllung ein bevorstehendes Abschalten der Gesamtvorrichtung (36) anzeigt, wobei bei Erfüllung der Anpassungsbedingung die Erhöhung der Betriebsspannung (2, 7, 21, 24, 28, 32, 33) temporär bis zu dem Abschalten erfolgt.

9. Verfahren nach Anspruch 8, **dadurch gekennzeichnet, dass** wenigstens eine der wenigstens einen auf das bevorstehende Abschalten bezogenen Anpassungsbedingung eine automatisch ermittelte und/oder von der Gesamtvorrichtung (36) bereitgestellte Abschaltinformation als Betriebsinformation auswertet und/oder wenigstens eine der wenigstens einen auf das bevorstehende Abschalten bezogenen Anpassungsbedingung bei Vorliegen einer Benutzereingabe, die eine einen Grenzwert überschreitende Abschaltdauer des Abschaltzeitraums (26) anzeigt, erfüllt ist.

10. Verfahren nach einem der vorangehenden Ansprüche, **dadurch gekennzeichnet, dass** wenigstens eine der wenigstens einen Anpassungsbedingung das Vorliegen einer initialen, insbesondere zeitlich begrenzten, Ladephase (31) für den Speicherkondensator (10) überprüft, wobei die Betriebsspannung (2, 7, 21, 24, 28, 32, 33) für die initiale Ladephase temporär höher als für wenigstens eine folgende Ladephase eingestellt wird.

11. Verfahren nach einem der vorangehenden Ansprüche, **dadurch gekennzeichnet, dass** die Betriebsspannungen (2, 7, 21, 24, 28, 32, 33) wenigstens teilweise durch wenigstens eine Spannungsquelle (13, 14) der Gesamtvorrichtung (46), insbesondere einen durch die Steuereinrichtung (16) ansteuerbaren Gleichspannungswandler (22), bereitgestellt werden und/oder als Steuereinrichtung (16) ein PMIC, insbesondere mit integriertem Gleichspannungswandler (22), verwendet wird.

12. Verfahren nach einem der vorangehenden Ansprüche, **dadurch gekennzeichnet, dass** der Speicherkondensator (10) ein Superkondensator, insbesondere ein EDLC, ist, und/oder die Verbrauchereinrichtung (11) eine Echtzeituhr (12) ist und/oder die Gesamtvorrichtung (36) eine Medizintechnikeinrichtung, insbesondere eine Bildaufnahmeeinrichtung, ist.

13. Gesamtvorrichtung (36), aufweisend eine Verbrauchereinrichtung (11), eine Steuereinrichtung (16) und einen Speicherkondensator (10), der
- als Energiepuffer der aus dem Speicherkondensator (10) betreibbaren, gepufferten Verbrauchereinrichtung (11) parallel geschaltet ist,
- eine maximal zum Betrieb zu verwendende Nennspannung aufweist und
- durch eine Betriebsspannung (2, 7, 21, 24, 28, 32, 33) der übergeordneten Gesamtvorrichtung (36), die dem Speicherkondensator (10) und der Verbrauchereinrichtung in einem Normalbetriebsmodus, in dem die Verbrauchereinrichtung (11) durch die Betriebsspannung (2, 7, 21, 24, 28, 32, 33) betrieben wird, bereitgestellt wird, auf einen von einem an dem Speicherkondensator (10) anfallenden Anteil der Betriebsspannung (2, 7, 21, 24, 28, 32, 33), der kleiner als die Nennspannung ist, abhängigen maximalen Ladezustand ladbar ist,
**dadurch gekennzeichnet,**
**dass** die Steuereinrichtung (16) ausgebildet ist, bei Erfüllung einer Anpassungsbedingung, die wenigstens eine Betriebsinformation des Speicherkondensators (10) und/oder wenigstens eine Betriebsinformation der Gesamtvorrichtung (36) auswertet, die Betriebsspannung (2, 7, 21, 24, 28, 32, 33) wenigstens temporär zu erhöhen.

14. Computerprogramm, welches, wenn es auf einer Steuereinrichtung (16) einer Gesamtvorrichtung (36) ausgeführt wird, diese veranlasst, die Schritte eines Verfahrens nach einem der Ansprüche 1 bis 12 durchzuführen.

15. Elektronisch lesbarer Datenträger, auf dem ein Computerprogramm nach Anspruch 14 gespeichert ist.
